# EUROPÄISCHE PATENTSCHRIFT

(11) **EP 3 833 954 B1**
(45) Veröffentlichungstag und Bekanntmachung des Hinweises auf die Patenterteilung: **12.03.2025**
(21) Anmeldenummer: 19778881.3
(22) Anmeldetag: 18.09.2019
(51) Int. Cl.: G01M 13/00, G06Q 90/00, G01H 1/00

(54) **VERBESSERTES BETRIEBSVERFAHREN FÜR GETRIEBE**
IMPROVED METHOD OF OPERATING TRANSMISSION
PROCÉDÉ DE FONCTIONNEMENT AMÉLIORÉ POUR ENGRENAGE

(30) Priorität: 26.10.2018 EP 18202907
(43) Veröffentlichungstag der Anmeldung: 16.06.2021
(73) Patentinhaber: Flender GmbH, 46395 Bocholt (DE)
(72) Erfinder: MEIS, Jean-Andre, 48249 Duelmen (DE); HUSSMANN, Carsten, 46397 Bocholt (DE); UHLENDING, Markus, 53773 Hennef (Sieg) (DE)
(74) Vertreter: Michalski Hüttermann & Partner Patentanwälte mbB
(86) Internationale Anmeldenummer: PCT/EP2019/074990
(87) Internationale Veröffentlichungsnummer: WO 2020/083573

(56) Entgegenhaltungen:
- EP-A2- 2 264 314
- US-A- 5 210 704
- US-A1- 2004 260 512
- US-B2- 7 149 657

## Beschreibung

Die Erfindung betrifft ein Betriebsverfahren für ein Getriebe, mit dem ein wahrscheinlichkeitsbehafteter Ausfallzeitpunkt für eine Getriebekomponente vorherzusagen ist. Die Erfindung betrifft auch ein Computerprogrammprodukt, mit dem das beanspruchte Betriebsverfahren umsetzbar ist. Gleichermaßen betrifft die Erfindung eine Steuereinheit für ein Getriebe, die mit einem entsprechenden Computerprogrammprodukt ausgerüstet ist. Die Erfindung betrifft ebenso ein Überwachungssystem, das über eine derartige Steuereinheit verfügt. Ferner betrifft die Erfindung ein Getriebe, das mit einem solchen Überwachungssystem koppelbar ist und eine Getriebeapplikation, die mit einem korrespondierenden Getriebe ausgestattet ist.

Aus US 2012/0029838 A1 ist ein Getriebe einer Windkraftanlage bekannt, das mit einer Mehrzahl an Beschleunigungssensoren und Drehzahlsensoren ausgestattet ist. Über diese werden Messdaten erzeugt, die einen Vibrationszustand und eine Drehzahl von zumindest einer Welle abbilden. Die Beschleunigungssensoren und Drehzahlsensoren sind mit einer Steuereinheit verbunden, die über ein Computerprogramm ausgewertet werden. Basierend hierauf wird vom Computerprogramm ein vorliegender Schädigungszustand des Getriebes ermittelt.

Die Druckschrift US 7,606,673 B2 offenbart ein Verfahren zur Analyse von Vibrationen eines Lagers. Dabei wird ein Degradationsfaktor ermittelt und mit einer durchschnittlichen Versagensdauer, auch mean-time-to-failure, kurz MTTF, genannt, kombiniert. Hieraus wird eine reduzierte durchschnittliche Versagensdauer, auch reduced-mean-time-to-failure, kurz RMTTF genannt, ermittelt. Der Degradationsfaktor wiederum wird anhand von Diskriminanten aus einer Frequenzanalyse ermittelt. Weiter wird basierend auf der RMTTF eine Ausfallwahrscheinlichkeit für das Lager ermittelt. Darüber hinaus werden im Verfahren aus US 7,606,673 B2 die drohenden finanziellen Folgen eines Ausfalls des Lagers und die aktuellen Reparaturkosten ermittelt und einem Benutzer angezeigt.

Aus dem Dokument DE 10 2007 017 614 A1 ist ein Betriebsverfahren für Getriebe bekannt, bei dem für rotierende Bauteile des Getriebes eine Schadensakkumulation ermittelt wird. Ferner wird ein Lastkollektiv ermittelt. Ein zu analysierendes Bauteil wird in eine Mehrzahl an Abschnitten eingeteilt und entsprechend werden individuelle Lastkollektive ermittelt.

EP 2 264 314 A2 offenbart ein Betriebsverfahren für eine Windkraftanlage, bei der Betriebszustände der Windkraftanlage klassifiziert werden. Die erzeugte elektrische Leistung der Windkraftanlage hängt dabei von der Windstärke ab, wobei eine erhöhte Windstärke auch zu erhöhten Beanspruchungen, insbesondere erhöhten Vibrationslasten führt. Die Vibrationslasten werden in fünf Kategorien eingeteilt. Für jede Beanspruchung in einer dieser fünf Kategorien wird eine zu erwartende Lebensdauer berechnet.

Aus US 2004/260512 A1 ist ein Verfahren zur Schadensabschätzung bekannt, bei dem ein Schädigungsmechanismus modelliert wird. Es werden unterschiedliche Belastungen bei ihren jeweiligen Intensitätsintervallen berücksichtigt, die zu einem Schaden aufsummiert werde). Zur weiteren Präzisierung können unterschiedliche Temperaturniveaus berücksichtigt werden.

Aus US 7 149 657 B2 ist es bekannt aus einer Vielzahl von Quellen stammende Daten, die einen Einfluss auf die Alterung eines Bauteils haben, zu bündeln und daraus eine Restlebensdauer abzuschätzen.

Aus US 5 210 704 A ist es bekannt, ein Hubschraubergetriebe bis zum mechanischen Versagen zu testen und mit Hilfe der dabei gewonnenen Daten und im regulären Betrieb eines baugleichen Hubschraubergetriebes eines Hubschraubers gemessenen Daten während einer Wartung am Boden verschiedene mögliche Schadensmechanismen bei dem gewarteten Hubschraubergetriebe festzustellen.

Beim Betrieb von Getriebeapplikationen, insbesondere von Windkraftanlagen oder Industrieanwendungen, besteht der Wunsch nach einer immer präziseren Prognose von bevorstehenden Ausfällen von Getriebekomponenten und einer zugehörigen Folgenabschätzung. Ein Nachteil der bekannten Verfahren zur Prognose eines Komponentenausfalls besteht darin, dass deren Vorhersagegenauigkeit hinter den stetig wachsenden Anforderungen zurückbleibt. Es besteht Bedarf an einer Möglichkeit bei einem Getriebe eine verlässlichere Prognose über bevorstehendes Versagen einer Getriebekomponente zu prognostizieren, die in einfacher Weise und kosteneffizient implementierbar ist.

Die Aufgabenstellung wird jeweils durch die Merkmale der unabhängigen Ansprüche gelöst.

Das Betriebsverfahren dient dem Betrieb eines Getriebes, das eine Mehrzahl an Getriebekomponenten umfasst. Unter einer Getriebekomponente sind dabei beispielsweise Stirnräder, Kegelräder, Planetenräder, Planetenträger, Hohlräder, Sonnenräder, ihre zugehörigen Wellen oder Achsen, Dichtungen, Gleit- und Wälzlager, Drehmomentstützen, Schrauben, Welle-Nabe-Verbindungen, Passfederverbindungen, Kurzverzahnungen, oder Gehäusekomponenten zu verstehen. Im erfindungsgemäßen Verfahren wird in einem ersten Schritt ein Betriebszustand des Getriebes herbeigeführt. Ein Betriebszustand ist dabei ein Zustand des Getriebes, in dem mittels Sensordaten insbesondere ein mechanischer Zustand des Getriebes beschreibbar ist. Dies kann ein stationärer Betriebszustand sein, aber auch ein transienter Vorgang, wie beispielsweise eine Beschleunigungsphase. Während des Betriebszustands erfolgt ein Erfassen einer mechanischen Beanspruchung einer ersten Getriebekomponente. Die mechanische Beanspruchung korrespondiert dabei mit dem vorliegenden Betriebszustand. Eine derartige mechanische Beanspruchung einer ersten Getriebekomponente kann beispielsweise eine Torsionsbeanspruchung einer Sonnenwelle, eine auf ein Gleitlager einwirkende Radialkraft oder eine Drehzahl eines Planetenrads sein. Die mechanische Beanspruchung ist, wie im Falle einer Drehzahl eines Planetenrads, unmittelbar ermittelbar oder mittelbar über ein physikalisches Modell aus unmittelbar erfassten Messdaten ableitbar. Dies kann beispielsweise eine Torsionsbeanspruchung einer Sonnenwelle sein, die über eine per Dehnmessstreifen an deren Oberfläche vorliegende Dehnung ermittelt wird. In einem zweiten Schritt wird anhand der ermittelten mechanischen Beanspruchung ein Schädigungsbeitrag für einen ersten Schädigungsmechanismus ermittelt. Eine an- und abschwellende mechanische Spannung an der ersten Getriebekomponente kann beispielsweise als lebensdauerverbrauchende Beanspruchung, also als Schädigungsbeitrag, im Rahmen einer sogenannten Low-Cycle-Fatigue, kurz LCF oder einer sogenannten High-Cycle-Fatigue erfasst und ausgewertet werden. Alternativ oder ergänzend kann der erste Schädigungsmechanismus auch Verschleiß, Zahnbruch oder Pitting an einer Verzahnung ausgebildet sein. Erfindungsgemäß wird der Schädigungsbeitrag für zumindest den ersten Schädigungsmechanismus ermittelt. Der erste Schädigungsmechanismus, also der Typ des Schädigungsvorgangs, ist dabei einstellbar, wobei das Einstellen über einen Algorithmus, eine Tabelle, oder eine Benutzereingabe erfolgen kann.

In einem dritten Schritt erfolgt ein Hinzufügen des Schädigungsbeitrags zu einer Schadenssumme in einem ersten Schadensakkumulationsmodell des ersten Schädigungsmechanismus. Derartige Schadensakkumulationsmodelle existieren für eine Vielzahl an Schädigungsmechanismen, wie beispielsweise die lineare Schadensakkumulation nach Palmgren und Miner. Das Hinzufügen ist als Addieren im Sinne des entsprechenden Schadensakkumulationsmodells aufzufassen, so dass im dritten Schritt durch die Schadenssumme der Fortschritt des ersten Schädigungsmechanismus ermittelt wird. Ausgehend von der vorliegenden Schadenssumme erfolgt ein vierter Schritt. Im vierten Schritt erfolgt ein Ermitteln einer Modell-Restlebensdauer der ersten Getriebekomponente anhand des ersten Schadensakkumulationsmodells. Die Modell-Restlebensdauer stützt sich dabei auf eine vorhandene theoretische Beschreibung des ersten Schädigungsmodells. Es wird dabei eine voraussichtliche Schadenssumme berücksichtigt, bei der die theoretisch ein Versagen der ersten Getriebekomponente erwartet wird. Anhand des theoretischen Modells des ersten Schädigungsmechanismus, mit dem die Modell-Restlebensdauer ermittelt wird, wird auch eine Eintrittswahrscheinlichkeit für das Erreichen der Modell-Restlebensdauer der ersten Getriebekomponente ermittelt. Die Eintrittswahrscheinlichkeit beschreibt beispielsweise, mit welcher Wahrscheinlichkeit die erste Getriebekomponente die prognostizierte Modell-Restlebensdauer erreichen wird.

Erfindungsgemäß wird die Eintrittswahrscheinlichkeit für die Modell-Restlebensdauer anhand von Datensätzen ermittelt, die an Vergleichskomponenten erhoben sind. Die Vergleichskomponenten sind im Wesentlichen baugleich zur ersten Getriebekomponente. Zum Erheben der Datensätze wurden oder werden die Vergleichskomponenten Beanspruchungen unterworfen und das Schädigungsverhalten, insbesondere das Versagen der entsprechenden Vergleichskomponente, erfasst. Basierend auf der Mehrzahl an Vergleichskomponenten und den entsprechenden Datensätzen ist durch statistische Auswertung eine maximale Schadenssumme, also die erträgliche Schädigung bis zum Versagen, der Vergleichskomponenten und der ersten Getriebekomponente ermittelbar. Dies wiederum erlaubt eine Aussage über die Wahrscheinlichkeit, welche maximale Schadenssumme für die erste Getriebekomponente real erträglich ist und damit über die Eintrittswahrscheinlichkeit, dass die Modell-Restlebensdauer durch die erste Getriebekomponente erreichbar ist. Das erfindungsgemäße Verfahren erlaubt es damit, gewonnene Erfahrung von baugleichen Vergleichskomponenten auf die eingesetzte erste Getriebekomponente zu übertragen. Die ermittelte Modell-Restlebensdauer und/oder die entsprechende Eintrittswahrscheinlichkeit sind dabei für einen Benutzer zur Überwachung des Betriebs des Getriebes beispielsweise auf einem Bildschirm oder Display anzeigbar. Während des Betriebs von langlebigen Getriebeapplikationen, wie beispielsweise Windkraftanlagen oder Industrieanwendungen, steigt damit die Genauigkeit in der Prognose des Versagens von Getriebekomponenten. Je länger das beanspruchte Betriebsverfahren läuft, umso präziser werden dessen Prognosen aufgrund der wachsenden Erfahrung an Vergleichskomponenten. Aufgrund der im Allgemeinen zunehmenden Reparaturanfälligkeit von Getriebeapplikationen bei zunehmendem Alter wird durch das erfindungsgemäße Verfahren die Wartung der Getriebeapplikationen so besser planbar und damit wirtschaftlicher. Hierdurch wird insgesamt die wirtschaftlich sinnvolle Betriebsdauer von Getrieben verlängert.

Beim beanspruchten Betriebsverfahren kann auch ein fünfter Schritt erfolgen, in dem ein Ausgeben einer Warnung erfolgt, wenn die Modell-Restlebensdauer einen einstellbaren ersten Schwellenwert und/oder die Eintrittswahrscheinlichkeit einen einstellbaren zweiten Schwellenwert unterschreitet. Ein Unterschreiten des ersten Schwellenwerts kann somit vor einem voraussichtlichen kurzfristigen Versagen der Getriebekomponente warnen. Ein Unterschreiten des zweiten Schwellenwerts zeigt an, dass nunmehr ein Erreichen einer einstellbaren gewünschten Rest-Lebensdauer hinreichend unwahrscheinlich ist. Durch Kombinationen von ersten und zweitem Schwellenwerten ist durch einen Benutzer ein Warnprofil einstellbar, das einen vorteilhaften Betrieb des Getriebes erlaubt, in dem unvorhergesehene Ausfälle vermieden werden. Dadurch ist insgesamt ein noch zuverlässigerer und wirtschaftlicherer Betrieb des Getriebes möglich.

Ferner können die Vergleichskomponenten, anhand deren Datensätzen die Eintrittswahrscheinlichkeit für die Modell-Rest-lebensdauer ermittelt wird, zumindest teilweise außerhalb des Getriebes eingesetzt werden. Die Vergleichskomponenten sind damit in Fremdgetrieben eingesetzt, die zu einer anderen Getriebeapplikation gehören. Unter einem Fremdgetriebe ist dabei jegliches Getriebe zu verstehen, das nicht das hier beschriebene Getriebe selbst ist. Die Getriebeapplikation, in der das mit dem beanspruchten Verfahren betriebene Getriebe eingesetzt wird, ist eine andere Getriebeapplikation. Beispielsweise können für Wälzlager, Wellen oder Gehäusekomponenten Datensätze von entsprechenden Getriebekomponenten eingesetzt werden, die in Fahrzeuggetrieben eingesetzt werden. Durch die hohen Stückzahlen in der Fahrzeugtechnik ist in einfacher Weise eine Vielzahl an Datensätzen bereitstellbar, die eine verlässliche Beurteilung des entsprechenden Schädigungsmechanismus erlauben. Alternativ oder ergänzend können Datensätze von Vergleichskomponenten durch Messungen in einem Prüffeld gewonnen werden, in dem eine korrespondierende Referenzmaschine betrieben wird. Die Datensätze der Vergleichskomponenten werden für das beanspruchte Verfahren beispielsweise über eine Datenverbindung in einem Speicher zum Abruf zur Verfügung gestellt. Das Betriebsverfahren ist somit in der Lage, eine erhöhte Anzahl an Vergleichskomponenten, aufgrund derer die Ermittlung der Eintrittswahrscheinlichkeit für die Modell-Restlebensdauer erfolgt, zu nutzen. Je mehr Vergleichskomponenten zur Verfügung stehen, umso schneller wächst eine Beurteilungsbasis für die Eintrittswahrscheinlichkeit, was wiederum eine präzisere Ermittlung der Eintrittswahrscheinlichkeit erlaubt. Insbesondere sind so selten eintretende Schadensereignisse in die Ermittlung der Eintrittswahrscheinlichkeit einbeziehbar, was auch die Genauigkeit bei der Ermittlung der Eintrittwahrscheinlichkeit steigert.

Beim beanspruchten Betriebsverfahren kann auch im zweiten Schritt anhand der mechanischen Beanspruchung der ersten Getriebekomponente in Kombination mit einer Übertragungsfunktion eine mechanische Beanspruchung einer zweiten Getriebekomponente ermittelt werden. Die Übertragungsfunktion ist dabei derart ausgebildet, dass zwischen der ersten und zweiten Getriebekomponente ein physikalischer Zusammenhang festgelegt wird. Beispielsweise kann aufgrund einer Radialbeanspruchung eines Wälzlagers an einer Planetenradachse eine statische Durchbiegung der Planetenradachse ermittelt werden. Ebenso kann eine Übertragungsfunktion aus einem Finite-Elemente-Modell zumindest einer Gehäusekomponente gewonnen werden.

Ferner kann durch Freischneiden einer mit einem Torsionsmoment beanspruchten Welle eine Lagerreaktion ermittelt werden. Ein derartiger physikalischer Zusammenhang ist dabei vorzugsweise in einem Digitalen Zwilling, auch digital twin genannt, von zumindest einer Baugruppe des Getriebes oder des gesamten Getriebes abbildbar. Basierend auf der mechanischen Beanspruchung der zweiten Getriebekomponente werden zumindest der dritte und vierte Schritt durchgeführt und somit für die zweite Getriebekomponente eine Modell-Restlebensdauer und eine zugehörige Eintrittswahrscheinlichkeit ermittelt. Korrespondierend erfolgen entsprechende Ermittlungen auf Basis von Datensätzen von Vergleichskomponenten, die im Wesentlichen baugleich mit der zweiten Getriebekomponente sind. Das beanspruchte Verfahren ist somit dazu geeignet, vorhandene Messdaten zu nutzen und weitergehend auszuwerten. Ein Ausrüsten weiterer Getriebekomponenten mit Sensoren ist somit entbehrlich. Dadurch wird der Funktionsumfang des beanspruchten Betriebsverfahrens in einfacher und kosteneffizienter Weise gesteigert.

Darüber hinaus kann beim beanspruchten Betriebsverfahren in zweiten Schritt basierend auf der mechanischen Beanspruchung der ersten Getriebekomponente ein Schädigungsbeitrag für einen zweiten Schädigungsmechanismus ermittelt werden. Anhand des Schädigungsbeitrags werden auch der dritte und vierte Schritt durchgeführt, also eine Schadenssumme, eine Modell-Restlebensdauer und eine korrespondierende Eintrittswahrscheinlichkeit für einen zweiten Schädigungsmechanismus ermittelt, der auf die erste Getriebekomponente einwirkt. Durch eine Überwachung und Auswertung mehrerer Schädigungsmechanismen ist eine flexiblere Prognose eines Versagens der ersten Getriebekomponente möglich. Beispielsweise können bei Schwellbeanspruchungen der ersten Getriebekomponente mit unterschiedlicher Frequenz High-Cycle-Fatigue und Low-Cycle-Fatigue gleichzeitig überwacht werden. Des Weiteren können als Schädigungsmechanismus Verschleiß, Zahnfußbruch, oder Pitting an einer Verzahnung überwacht werden. Die so gewonnene Vielseitigkeit des beanspruchten Betriebsverfahrens steigert weiter dessen Vorhersagegenauigkeit. Ferner kann in einem weiteren Schritt erfasst werden, auf welchen Schädigungsmechanismus die erste und/oder zweite Getriebekomponente versagt. Dadurch ist überprüfbar, ob der erste und/oder zweite Schädigungsmechanismus für die entsprechende Getriebekomponente zutreffend gewählt ist. Entsprechende Daten sind als Datensatz bereitstellbar, so dass die vorhandene Erfahrungsbasis für die korrespondierende Getriebekomponente selbsttätig ausbaubar ist. Hierdurch wird die Genauigkeit einer Schädigungsvorhersage weiter gesteigert.

In einer weiteren Ausführungsform des beanspruchten Betriebsverfahrens erfolgt das Ermitteln der Eintrittswahrscheinlichkeit für die Modell-Restlebensdauer mittels einer Verteilungsfunktion von zulässigen Schadenssummen der Vergleichskomponenten. Unter den zulässigen Schadenssummen sind die aggregierten Schädigungsbeiträge zu verstehen, bei denen ein Versagen der entsprechenden Vergleichskomponente eingetreten ist. Mittels der Verteilungsfunktion ist ermittelbar, welche zulässige Schadenssumme, also maximale Schadenssumme, für die erste Getriebekomponente mit welcher Wahrscheinlichkeit zu erwarten ist. Dies umfasst beispielsweise für eine Vergleichskomponente eine Wöhler-Linie, die für die jeweilige Vergleichskomponente individuell ist und sich auf einen bestimmten Schädigungsmechanismus bezieht. Die Datensätze der Vergleichskomponenten, die zur Ermittlung der Eintrittswahrscheinlichkeit der Modell-Restlebensdauer eingesetzt wird, können die jeweiligen Wöhler-Linien und/oder zulässigen Schadenssummen, also maximale Schadenssummen, umfassen. Laut Erfindung weisen die Datensätze auch eine Information über den Typ des entsprechenden Schädigungsmechanismus auf, insbesondere eine Information über einen dominanten Schädigungsmechanismus. Unter einem dominanten Schädigungsmechanismus ist dabei der Schädigungsmechanismus zu verstehen, der voraussichtlich zum Ausfall der Getriebekomponente führen wird, und somit für die Getriebekomponente dimensionierend ist. Zusätzlich kann die Angabe eines dominanten Schädigungsmechanismus spezifisch für unterschiedliche Applikationen im Datensatz gespeichert sein. Dadurch ist ein Erwartungshorizont für den Ausfall der Getriebekomponente genauer beschreibbar.

Des Weiteren kann im beanspruchten Betriebsverfahren die vorliegende Schadenssumme während des Ablaufs des Verfahrens veränderbar ausgebildet sein. Die Schadenssumme ist somit während des Betriebs korrigierbar, um beispielsweise Schadensereignisse zu berücksichtigen, die nicht durch Messdaten an der ersten oder einer der weiteren Getriebekomponenten abgebildet sind. Ebenso können lebensdauerverlängernde Maßnahmen durch eine entsprechende Veränderung berücksichtigt werden. Dies kann beispielsweise eine Erneuerung von Getriebeöl oder ein Austausch einer Getriebekomponente sein. Die Veränderung der Schadenssumme kann beispielsweise durch einen Algorithmus erfolgen, durch den Wartungsvorgänge erfassbar sind. Alternativ oder ergänzend kann die Schadenssumme auch durch eine Benutzereingabe veränderbar sein. Infolgedessen ist das beanspruchte Betriebsverfahren dazu geeignet, den vorliegenden Betrieb des Getriebes umfassender abzubilden und so seine Prognosegenauigkeit zu steigern.

Im beanspruchten Betriebsverfahren kann in einem weiteren Schritt basierend auf der Modell-Restlebensdauer der ersten Getriebekomponente und/oder deren Eintrittswahrscheinlichkeit für die erste Getriebekomponente und/oder das Getriebe ein zu erwartender Reparaturaufwand ermittelt werden. Der Reparaturaufwand ist beispielsweise durch Aufruf einer Erfahrungsdatenbank ermittelbar, in der Daten über Arbeitszeitbedarf, Hilfsmittelbedarf, Beschaffungsdauer eines Ersatzteils, und/oder Ersatzteilkosten für den Austausch der ersten Getriebekomponente gespeichert sind. Alternativ oder ergänzend werden zu erwartende Ausfallfolgeaufwände ermittelt, die bei Ausfall der ersten Getriebekomponente zu erwarten sind. Dies umfasst insbesondere Stillstandszeiten des Getriebes und/oder der zugehörigen Getriebeapplikation. Dies erlaubt einem Benutzer, einen Wartungsvorgang für das Getriebe bzw. die Getriebekomponente zielgerichtet zu planen.

In einer weiteren Ausführungsform des beanspruchten Betriebsverfahrens kann für die erste Getriebekomponente eine Bevorratungsanweisung ausgegeben werden, wenn die Modell-Rest-lebensdauer den einstellbaren ersten Schwellenwert unterschreitet und/oder die Eintrittswahrscheinlichkeit einen einstellbaren zweiten Schwellenwert unterschreitet. Die Bevorratungsanweisung kann als Nachricht oder Befehl an eine Materialwirtschaftssoftware ausgebildet sein, so dass durch die Bevorratungsanweisung eine Beschaffung eines Ersatzteils für die erste Getriebekomponente eingeleitet wird. Alternativ oder ergänzend können neben dem ersten und/oder zweiten Schwellenwert auch weitere Daten berücksichtigt werden, wie beispielsweise eine Beschaffungsdauer oder verfügbare Kapazität von Wartungspersonal. Insbesondere ist das Unterschreiten des ersten und/oder zweiten Schwellenwerts mit der Bevorratungsanweisung verknüpfbar. Dies erlaubt eine genauere Überwachung des Betriebs des entsprechenden Getriebes inklusive seiner entsprechenden Getriebekomponenten.

Ferner kann das beanspruchte Betriebsverfahren die Modell-Restlebensdauer und/oder deren Eintrittswahrscheinlichkeit anhand eines einstellbaren Lastniveaus für den Weiterbetrieb erfolgen. Das Lastniveau charakterisiert dabei die zu erwartenden mechanischen Beanspruchungen der ersten Getriebekomponente. Das einstellbare Lastniveau kann als Extrapolation eines im bisherigen Betrieb vorliegenden Lastniveaus ausgebildet sein. Alternativ kann das einstellbare Lastniveau auch einer geplanten Betriebsweise des Getriebes entsprechen. Weiter alternativ kann das einstellbare Lastniveau als abschnittsweise Kombination eines bisher vorliegenden Lastniveaus und eines Lastniveaus ausgebildet sein, das mit der geplanten Betriebsweise korrespondiert. Das Einstellen des Lastniveaus für den Weiterbetrieb ist mittels eines Algorithmus, einer Tabelle und/oder durch eine Benutzereingabe durchführbar. Ein Algorithmus zur Einstellung des Lastniveaus für einen Weiterbetrieb kann in einer Industrieanwendung beispielsweise mit einer Arbeitsplanungssoftware gekoppelt sein. Bei einer Windkraftanlage kann ein solcher Algorithmus beispielsweise als Prognose anhand einer Wetterdatenbank ausgebildet sein.

Erfindungsgemäß werden zumindest eine Modell-Restlebensdauer und deren Eintrittswahrscheinlichkeit in einem Datensatz gespeichert, der eine Information über den Typ des entsprechenden Schädigungsmechanismus aufweist. Darüber hinaus können im beanspruchten Betriebsverfahren zumindest eine mechanische Beanspruchung, zumindest ein Schädigungsbeitrag, zumindest eine Schadenssumme und/oder zumindest eine Typeninformation über einen ersten Schädigungsmechanismus in dem Datensatz gespeichert werden. Der Datensatz ist beispielsweise auf einem Speicher hinterlegbar, der außerhalb des Getriebes oder der Getriebeapplikation angeordnet ist. Der so hinterlegte Datensatz ist weiter durch einen Benutzer veränderbar. Ferner wird der so hinterlegte Datensatz als Vergleichsdatensatz für weitere im Wesentlichen baugleiche Getriebekomponenten bereitgestellt. Die mit dem beanspruchten Betriebsverfahren überwachte erste Getriebekomponente dient damit für andere Getriebekomponenten als Vergleichskomponente. Durch das Zusammenwirken einer Vielzahl an baugleichen Getriebekomponenten ist somit eine Erfahrungsdatenbank erzeugbar, die für eine Vielzahl an Anwendungsfällen eine präzise Prognose über die entsprechenden Getriebekomponenten erlaubt. Ferner ist eine Vielzahl an entsprechend bereitgestellten Datensätzen von baugleichen Getriebekomponenten eine sogenannte Big-Data-Analyse durchführbar, durch die systematisch auftretende Schädigungen ermittelbar sind. Dies können beispielsweise frühzeitige Ausfälle eines bestimmten Lagers sein. Eine solche Big-Data-Analyse erlaubt es insbesondere, bestehende Konstruktionen zu verbessern und somit eine existierende Modellpalette von Getrieben zielgerichtet zu pflegen. Ferner können Datensätze von Vergleichskomponenten als Eingabe für einen Maschinen-Lern-Algorithmus dienen und durch den Maschinen-Lern-Algorithmus Muster bei einer Schädigung zu erkennen, die beispielsweise zu einer vorzeitigen Schädigung führen. Dadurch wird aus den Datensätzen, die durch das beanspruchte Verfahren erzeugt werden, ein weitergehender Nutzen gezogen werden.

Die zugrundeliegende Aufgabenstellung wird auch durch das erfindungsgemäße Computerprogrammprodukt gelöst. Das Computerprogrammprodukt ist in nicht-flüchtiger Form auf einem Datenträger, wie beispielsweise einer Festplatte, einem USB-Speicher oder einem optischen Datenträger speicherbar und mit einer entsprechenden Recheneinheit ausführbar. Das erfindungsgemäße Computerprogrammprodukt ist dazu ausgebildet, ein Betriebsverfahren nach zumindest einer der oben skizzierten Ausführungsformen für den Betrieb eines Getriebes umzusetzen. Dazu umfasst das erfindungsgemäße Computerprogrammprodukt zumindest ein erstes Teilprogramm. Das zumindest eine erste Teilprogramm ist dazu ausgebildet, das beanspruchte Betriebsverfahren entweder vollständig oder teilweise umzusetzen. Bei einer teilweisen Umsetzung des Betriebsverfahrens ist das erste Teilprogramm zumindest vorübergehend kommunikativ mit einem zweiten Teilprogramm verbunden. Unter einer kommunikativen Verbindung der Teilprogramme ist dabei eine Kopplung unter einseitigem oder gegenseitigem Datenaustausch zu verstehen, beispielsweise eine Internetverbindung. Dadurch sind unterschiedliche Funktionen des zugrundeliegenden Verfahrens mit dem ersten oder zweiten Teilprogramm verwirklichbar. Beispielsweise kann eine Einstellung eines Schwellenwerts oder einer Schadenssumme über das zweite Teilprogramm erfolgen während der Abgleich mit diesen Schwellenwerten oder Schadenssummen in ersten Teilprogramm durchgeführt wird. Die erfindungsgemäße Lösung ist damit modularisierbar und deshalb in einfacher Form herstellbar.

Gleichermaßen wird die zugrundeliegende Aufgabenstellung auch durch die erfindungsgemäße Steuereinheit für ein Getriebe gelöst. Die Steuereinheit verfügt über einen Speicher und eine Recheneinheit, die zur Ausführung eines Computerprogrammprodukts ausgebildet sind. Ferner ist die Steuereinheit unmittelbar oder mittelbar mit einer Mehrzahl an Sensoren verbindbar, durch die die erste Getriebekomponente überwachbar ist. Ebenso ist die Steuereinheit dazu ausgebildet, zugehörige Messdaten von den Sensoren zu empfangen und auszuwerten. Die Steuereinheit ist erfindungsgemäß mit einem Computerprogrammprodukt gemäß einer der oben dargestellten Ausführungsformen ausgestattet, und somit dazu geeignet, das erfindungsgemäße Betriebsverfahren zu implementieren.

Ferner kann die beanspruchte Steuereinheit für ein Getriebe als interne Steuereinheit oder als übergeordnete Steuereinheit ausgebildet sein. Eine interne Steuereinheit ist am Getriebe oder an dessen zugehöriger Getriebeapplikation angebracht. Dies kann eine Montage in oder an einem Gehäuse des Getriebes sein, oder an einem Maschinenrahmen, an dem das Getriebe befestigt ist. Eine übergeordnete Steuereinheit wiederum kann separat vom zugehörigen Getriebe an einem anderen Ort installiert sein. Beispielsweise kann die übergeordnete Steuereinheit als Speicherprogrammierbare Steuerung, auch Programmable Logic Controller, kurz PLC, als Leitrechner, als Webserver oder als Computer-Cloud ausgebildet sein. Ebenso können auch zumindest eine interne und eine übergeordnete Steuereinheit vorgesehen sein um das erfindungsgemäße Betriebsverfahren umzusetzen. Dabei sind die interne und die übergeordnete Steuereinheit zumindest zu einer vorübergehenden kommunikativen Verbindung miteinander ausgebildet.

Ebenso wird die zugrundeliegende Aufgabenstellung durch das erfindungsgemäße Überwachungssystem gelöst, das dazu ausgebildet ist, zumindest eine erste Getriebekomponente zu überwachen. Das Überwachungssystem umfasst eine Mehrzahl an Sensoren, die jeweils zu einem Erfassen von Messdaten ausgebildet sind. Die mittels der Sensoren ermittelbaren Messdaten korrespondieren dabei mit zumindest einer mechanischen Beanspruchung, der die erste Getriebekomponente im Betrieb des Getriebes unterworfen ist. Dies können beispielsweise eine Drehzahl und eine Radialbeanspruchung eines Wälzlagers sein. Das Überwachungssystem umfasst auch zumindest eine Steuereinheit, die mit der Mehrzahl an Sensoren verbunden ist und dazu ausgebildet ist, deren Messdaten zu empfangen und auszuwerten. Die zumindest eine Steuereinheit ist als interne Steuereinheit oder als übergeordnete Steuereinheit im Sinne einer der oben skizzierten Ausführungsformen ausgebildet. Alternativ kann das Überwachungssystem auch eine interne und eine übergeordnete Steuereinheit aufweisen, die zumindest vorübergehend kommunikativ miteinander verbunden sind. Optional kann das Überwachungssystem auch mit einem Musterspeicher versehen sein, in dem eine Mehrzahl an Referenzzuständen abgespeichert ist, die zur weiteren Auswertung eines vorliegenden Betriebszustands einsetzbar sind.

Ferner wird die Aufgabenstellung durch das erfindungsgemäße Getriebe gelöst. Das Getriebe umfasst eine Mehrzahl an Getriebekomponenten und ist als Planetengetriebe, Stirnradgetriebe oder Kegelradgetriebe ausgebildet. Das Getriebe umfasst zumindest eine erste Getriebekomponente und ist mit zumindest einem Sensor gekoppelt, wobei der Sensor einem Überwachungssystem zugeordnet ist. Das Überwachungssystem ist gemäß einer der oben beschriebenen Ausführungsformen ausgebildet. Das erfindungsgemäße Getriebe ist somit mittels des oben beschriebenen Betriebsverfahrens überwachbar und eine bevorstehende Schädigung der ersten Getriebekomponente ist somit zuverlässig vorhersagbar.

Die zugrundeliegende Aufgabenstellung wird gleichermaßen durch die erfindungsgemäße Getriebeapplikation gelöst, die eine Antriebseinheit und eine Abtriebseinheit umfasst. Zwischen der Antriebseinheit und der Abtriebseinheit ist drehmomentübertragend ein Getriebe angeordnet, das von der Antriebseinheit zur Abtriebseinheit zu einer Drehzahländerung ausgebildet ist. Die Antriebseinheit kann dabei beispielsweise an Windrotor, als Elektromotor, als Verbrennungsmotor oder als Hydraulikmotor ausgebildet sein. Die Abtriebseinheit kann als Generator oder als mechanische Anwendung, wie beispielsweise eine Rohrmühle, eine Zementmühle, eine Vertikalmühle, als Extruder, als Förderband, als Pumpe, als Kompressor, als Hubanlage, oder als Schrott- oder Müllpresse ausgebildet sein. Weiter alternativ kann die Abtriebseinheit auch als Welle eines Fahrzeugantriebs ausgebildet sein. Dementsprechend ist die Getriebeapplikation als Windkraftanlage, als Industrieanwendung, als Landfahrzeug, als Wasserfahrzeug oder als Luftfahrzeug ausgebildet sein. Eine Industrieanwendung kann dabei als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung Müllpresse oder Schrottpresse ausgebildet sein Erfindungsgemäß ist das Getriebe gemäß einer der oben skizzierten Ausführungsformen ausgebildet. Durch den Einsatz des erfindungsgemäßen Betriebsverfahrens wird ein zuverlässigerer Betrieb des Getriebes erzielt, so dass die Ausfallsicherheit bei den Getriebeapplikationen erhöht ist.

Die Erfindung wird im Folgenden anhand einzelner Ausführungsformen beschrieben. Die Merkmale der einzelnen Ausführungsformen sind dabei untereinander kombinierbar. Die Figuren sind insoweit in gegenseitiger Ergänzung zu lesen, dass gleiche Bezugszeichen in den Figuren auch die gleichen technischen Bedeutungen haben. Es zeigen im Einzelnen:
- FIG 1: einen schematischen Aufbau einer ersten Ausführungsform des beanspruchten Getriebes;
- FIG 2: einen schematischen Ablauf einer ersten Ausführungsform des beanspruchten Verfahrens;
- FIG 3: ein Diagramm zu einem Schritt des beanspruchten Verfahrens;
- FIG 4: einen schematischen Ablauf einer zweiten Ausführungsform des beanspruchten Verfahrens;
- FIG 5: einen schematischen Ablauf einer dritten Ausführungsform des beanspruchten Verfahrens;
- FIG 6: einen schematischen Aufbau eines beanspruchten Überwachungssystems;
- FIG 7: einen schematischen Aufbau einer beanspruchten **Ge**triebeapplikation.

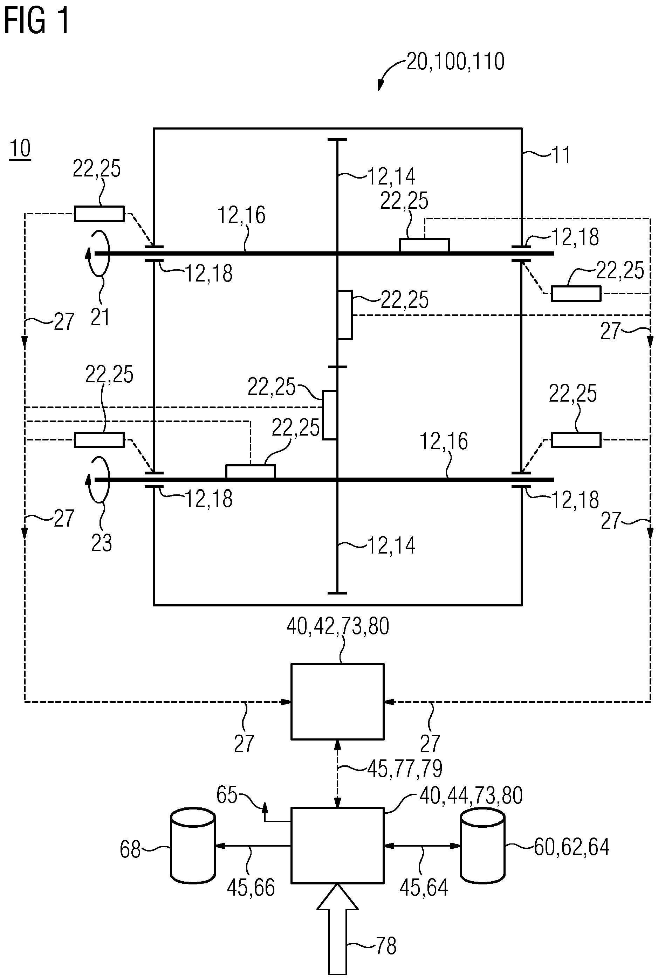

FIG 1 zeigt schematisch einen Aufbau einer ersten Ausführungsform eines beanspruchten Getriebes 10, das über Sensoren 22 und eine als interne Steuereinheit 42 ausgebildete Steuereinheit 40 verfügt, mit denen das beanspruchte Verfahren 100 umgesetzt wird. Das Getriebe 10 umfasst ein Gehäuse 11, in oder an dem eine Mehrzahl an Getriebekomponenten 12 aufgenommen ist. Die Getriebekomponenten 12 sind als Zahnräder 14, als Wellen 16 und als Lager 18 ausgebildet. Das Getriebe 10 ist ohne Beschränkung der Allgemeinheit der Erfindung in FIG 1 als Stirnradgetriebe ausgebildet. Die Zahnräder 14 sind auf den Wellen 16 angebracht, die wiederum in Lagern 18 drehbar aufgenommen sind. Die Lager 18 sind am Gehäuse 11 befestigt. Jedes der Getriebekomponenten 12, also jedes Zahnrad 14, jede Welle 16 und jedes Lager 18, sind mit einem Sensor 22 versehen, der dazu geeignet ist, während eines Betriebs des Getriebes 10 eine mechanische Beanspruchung 25 der entsprechenden Getriebekomponente 12 mittelbar oder unmittelbar zu erfassen. Dazu sind die Sensoren 22 als Dehnungsmessstreifen, kurz DMS, als Kraftaufnehmer, als Temperatursensor, Drehzahlsensor, Oberflächenwellensensor, kurz OFW-Sensor, als Kamera, oder eine Kombination dieser ausgebildet. Unter einem unmittelbaren Erfassen einer mechanischen Beanspruchung 25 ist beispielsweise ein Erfassen einer Dehnung an einer Oberfläche einer Welle 16 mit einem DMS oder einem OFW-Sensor zu verstehen. Unter einem mittelbaren Erfassen einer mechanischen Beanspruchung 25 ist beispielsweise eine Temperaturerfassung eines Lagers 18 zu verstehen, wobei aus der erfassten Temperatur ein thermischer Dehnungszustand des Lagers mittels eines entsprechenden Modells ermittelbar ist. Die Sensoren 22 sind dazu ausgebildet, dementsprechend Messdaten 27 zu erzeugen, die an eine Steuereinheit 40 übermittelt werden. Bei einem mittelbaren Erfassen der mechanischen Beanspruchung 25 einer Getriebekomponente 12 ist die mechanische Beanspruchung 25 von zumindest einer der Steuereinheiten 40 aus den empfangenen Messdaten 27 ermittelbar.

Die interne Steuereinheit 42 ist mit einer weiteren Steuereinheit 40 verbunden, die als übergeordnete Steuereinheit 44 ausgebildet ist. Die Steuereinheiten 40 sind über eine Datenverbindung 45 kommunikativ miteinander gekoppelt. Auf beiden Steuereinheiten 40 ist ein Computerprogrammprodukt 80 in nicht-flüchtiger Form ausführbar gespeichert, das im Betrieb des Getriebes 10 auch ausgeführt wird. Die Computerprogrammprodukte 80 sind zur Verarbeitung der empfangenen Messdaten 27 geeignet und dazu ausgebildet, mittels der Messdaten 27 am Getriebe 10 das erfindungsgemäße Verfahren 100 umzusetzen. Durch die Datenverbindung 45 sind zwischen der internen Steuereinheit 42 und der übergeordneten Steuereinheit 44 auch Parameter 73 austauschbar, durch die der Ablauf des Verfahrens 100 beeinflusst wird. Die Parameter 73, die in der internen Steuereinheit 42 für den Ablauf des Verfahrens 100 eingesetzt werden, sind dadurch in puncto Typ und Wert durch die übergeordnete Steuereinheit 44 als Vorgabe 77 einstellbar. Ebenso sind Vorgaben 77 zum Verfahren 100 zwischen der übergeordneten Steuereinheit 44 und der internen Steuereinheit 42 austauschbar, die durch einen Algorithmus 79 vorgeben werden. Ein solcher Algorithmus 79 ist dabei auf der internen Steuereinheit 42 und der übergeordneten Steuereinheit 44 ausführbar. Ebenso sind die Vorgaben 77 durch eine Benutzereingabe 78 erzeugbar, die an der übergeordneten Steuereinheit 44 erfolgt. Die übergeordnete Steuereinheit 44 ist auch mit einer Datenbank 60 über eine Datenverbindung 45 kommunikativ gekoppelt. In der Datenbank 60 sind Datensätze 64 von Vergleichskomponenten 62 gespeichert, die als Parameter 73 auch an die interne Steuereinheit 42 weiterleitbar sind. Die Datensätze 64 der Vergleichskomponenten 62 werden zur Durchführung des erfindungsgemäßen Verfahrens 100 als Vergleichswerte eingesetzt. Dabei handelt es sich um Vergleichskomponenten 62, die im Wesentlichen baugleich mit der entsprechenden Getriebekomponente 12 ist, die durch das Verfahren 100 zu überwachen ist. Ferner ist die übergeordnete Steuereinheit 44 mit einem Materialwirtschaftssystem 68 über eine Datenverbindung 45 kommunikativ verbunden. Die übergeordnete Steuereinheit 44 ist dazu ausgebildet, eine Bevorratungsanweisung 66 an das Materialwirtschaftssystem 68 auszugeben um so beispielsweise bei einem bevorstehenden Ausfall einer Getriebekomponente 12 ein entsprechendes Ersatzteil zu reservieren oder beschaffen zu lassen. Gleichermaßen ist die übergeordnete Steuereinheit 44 dazu geeignet eine Warnung 65 an einen Benutzer auszugeben, wenn durch das Verfahren 100 ermittelt wird, dass ein Ausfall einer Getriebekomponente 12 bevorsteht.

In FIG 1 ist das Getriebe 10 in einem Betriebszustand 20 dargestellt, in dem ein erster Verfahrensschritt 110 durchgeführt wird. Es wird Antriebsleistung 21 zugeführt, die unter Berücksichtigung mechanischer Verluste als Abtriebsleistung 23 vom Getriebe 10 wieder abgegeben wird. Durch die Antriebsleistung 21 stellen sich in den Getriebekomponenten 12 die mechanischen Beanspruchungen 25 ein, die durch die Sensoren 22 erfasst werden. Unter dem Betriebszustand 20, von dem das Verfahren 100 im ersten Verfahrensschritt 110 ausgeht, ist ein Betriebszustand zu verstehen, in denen durch die Sensoren 22 im Sinne des Verfahrens 100 nutzbare Messdaten 27 erzeugt werden. Der Betriebszustand 20 kann dabei ein stationärer Betriebszustand sein oder ein transienter Vorgang, beispielsweise eine Beschleunigung.

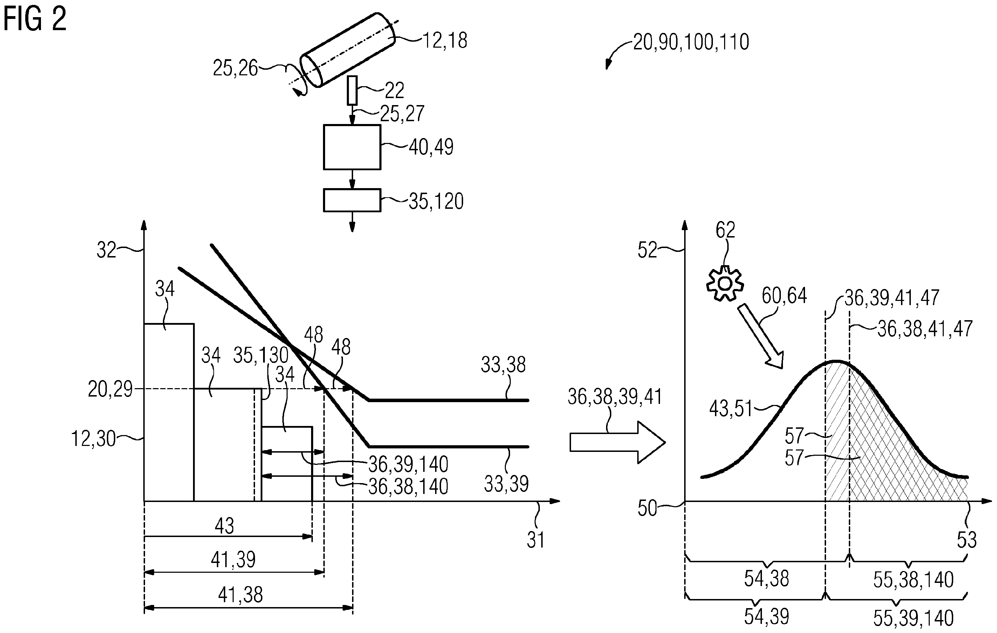

In FIG 2 ist schematisch ein weiterer Ablauf einer Ausführungsform des beanspruchten Verfahrens 100 dargestellt, das an einer Getriebekomponente 12 wie in FIG 1 ausgeführt wird. Die Getriebekomponente 12 ist dabei eine Welle 18, die mit einem Sensor 22 gekoppelt ist. Die Getriebekomponente 12, also die Welle 18, ist während eines in einem ersten Verfahrensschritt 110 vorliegenden Betriebszustands 20, einer Torsionslast 26 unterworfen. Durch die Torsionslast 26 wird eine mechanische Beanspruchung 25 der Welle 18 hervorgerufen, die in Form von Messdaten 27 erfasst wird und an eine Verarbeitungseinheit 49 der Steuereinheit 40 gesendet wird. Mittels der Verarbeitungseinheit 49, die einzeln oder modular der internen und/oder übergeordneten Steuereinheit 42, 44 zugeordnet sein kann, erfolgt in einem zweiten Verfahrensschritt 120 ein Ermitteln eines Schädigungsbeitrags 35. Der Schädigungsbeitrag 35 entspricht dabei einer Schädigung der überwachten Getriebekomponente 12, also der Welle 18, die durch die erfasste mechanische Beanspruchung 25 hervorgerufen wird. Das Ermitteln des Schädigungsbeitrags 35 erfolgt im Rahmen eines jeweiligen Schadensakkumulationsmodells 30, das für die Getriebekomponente 12 einstellbar ist.

Das Schadensakkumulationsmodell 30 für die entsprechende Getriebekomponente 12 ist in FIG 2 durch das linke Diagramm dargestellt. Es umfasst eine horizontale Lastspielwechselachse 31 und eine vertikale Intensitätsachse 32 für einwirkende Lastspiele. Zum Schadensakkumulationsmodell 30 gehören auch Modell-Grenzlinien 33, die jeweils einem ersten oder zweiten Schädigungsmechanismus 38, 39 zugeordnet sind. Durch die Modell-Grenzlinien 33 wird jeweils vorgegeben, bei welcher Schadenssumme 43 das Schadensakkumulationsmodell 30 beim entsprechenden Schädigungsmechanismus 38, 39 von einem Versagen der Getriebekomponente 12 ausgeht. Dies können beispielsweise LCF und HCF, Verschleiß, Zahnfußbruch oder Pitting an einer Verzahnung sein. Der im zweiten Verfahrensschritt 120 ermittelte Schädigungsbeitrag 35, der im Betriebszustand 20 eintritt, wird in einem dritten Verfahrensschritt 130 im vorhandenen Schadensakkumulationsmodell 30 in einer Schadensgruppe 34 zu einer bereits vorliegenden Schadenssumme 43 addiert. Die Schadenssumme 43 ist, wie in FIG 1 gezeigt, eine Aggregation aus Schädigungen in einzelnen Schadensgruppen 34 unterschiedlicher Intensität. Des Weiteren wird in einem vierten Verfahrensschritt 140 für eine einstellbares Lastniveau 29 ermittelt, welche Modell-Restlebensdauer 36 der Getriebekomponente 12 verbleibt. Diese Ermittlung der Modell-Restlebensdauer 36 ist in FIG 2 auch durch die Pfeile 48 veranschaulicht, deren Länge von einem mit dem Lastniveau 29 korrespondierenden Block der entsprechenden Schadensgruppe 34 zur Modell-Grenzlinie 33 des ersten oder zweiten Schädigungsmechanismus 38, 39. Hieraus ergeben sich jeweils beim ersten und zweiten Schädigungsmechanismus 38, 39 aus den entsprechenden Modell-Restlebensdauern 36 korrespondierende Modell-Gesamtlebensdauern 41 der Getriebekomponente 12.

Basierend auf den Modell-Restlebensdauern 36 für den ersten und zweiten Schädigungsmechanismus 38, 39, und damit den Modell-Gesamtlebensdauern 41 der Getriebekomponente 12 erfolgt eine Ermittlung der Eintrittswahrscheinlichkeiten 57 dafür, dass die Getriebekomponente 12 die entsprechende Modell-Gesamtlebensdauer 41 auch real erreicht. Dies ist in FIG 2 im rechten Verteilungsdiagramm 50 dargestellt, das eine horizontale Lebensdauer-Achse 53 und eine vertikale Häufigkeitsachse 52 umfasst. Das Diagramm weist auch eine Kurve einer Verteilungsfunktion 51 auf, die wiedergibt, mit welcher Häufigkeit bei mit der Getriebekomponente 12 baugleichen Vergleichskomponenten 62 im Betrieb eine bestimmte Schadenssumme 43 erreicht wird. Im Verteilungsdiagramm 50 wird im vierten Verfahrensschritt 140 durch eine vertikale Linie 47 vorgegeben, welche Modell-Gesamtlebensdauer 41 bei einem ersten oder zweiten Schädigungsmechanismus 38, 39 und einer zuvor ermittelten Modell-Restlebensdauer 36 von der Getriebekomponente 12 gefordert sind. Dadurch ergeben sich für die Schädigungsmechanismen 38, 39 jeweils im Verteilungsdiagramm 50 ein Überlebensbereich 55 und ein Versagensbereich 54. Die jeweilige Fläche unter der Verteilungsfunktion 51 im entsprechenden Überlebensbereich 55 korrespondiert mit einer Eintrittswahrscheinlichkeit 57, mit der die Getriebekomponente 12 eine geforderte Modell-Restlebensdauer 36 für den jeweiligen Schädigungsmechanismus 38, 39 übertrifft. Folglich ist feststellbar, mit welcher Wahrscheinlichkeit die Getriebekomponente 12 auch die geforderte Modell-Restlebensdauer 36 erreichen wird. Die Verteilungsfunktion 51 ist durch eine Mehrzahl an Datensätzen 64 von Vergleichskomponenten 62 vorgegeben, die in einer Datenbank 60 gespeichert sind. Die Datensätze 64 werden mittels einer Vielzahl an Vergleichskomponenten 62 dauerhaft aktualisiert, so dass Erfahrungen von Benutzern von baugleichen Vergleichskomponenten 62 für die Getriebekomponente 12 genutzt werden können. Durch eine derart aktualisierte Verteilungsfunktion 51 sind unter anderem unvorhergesehen lange Lebensdauern, also unvorhergesehen hohe Schadenssummen 43 bis zu einem Versagen, von Getriebekomponenten 12 im Betrieb ausnutzbar. Umgekehrt sind überraschend kurze Lebensdauern, also niedrige Schadenssummen 43 bis zu einem Versagen, berücksichtigbar. Durch ein ständiges Aktualisieren der Verteilungsfunktion 51 mittels Vergleichskomponenten 62 wird ein dynamisches Überwachungssystem 90 verwirklicht, das mit zunehmender Betriebsdauer zuverlässiger und präziser in der Vorhersage von Versagen von Getriebekomponenten 12 wird.

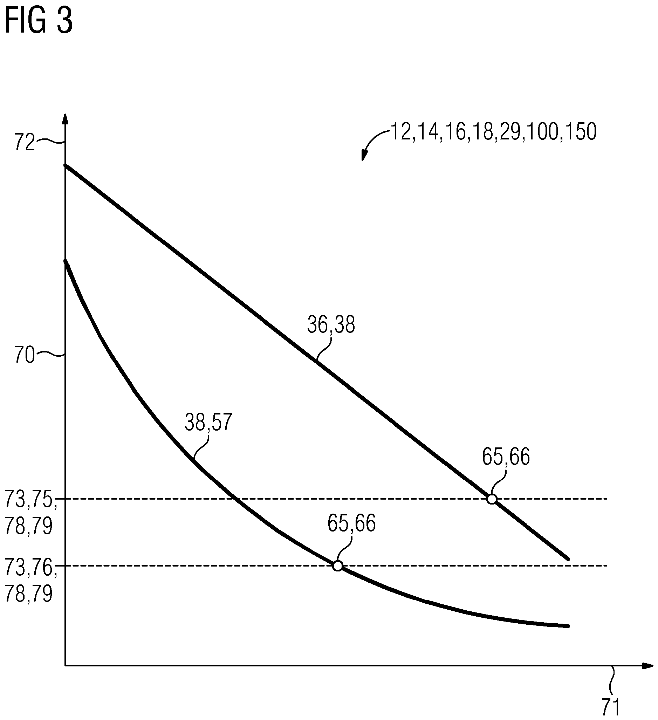

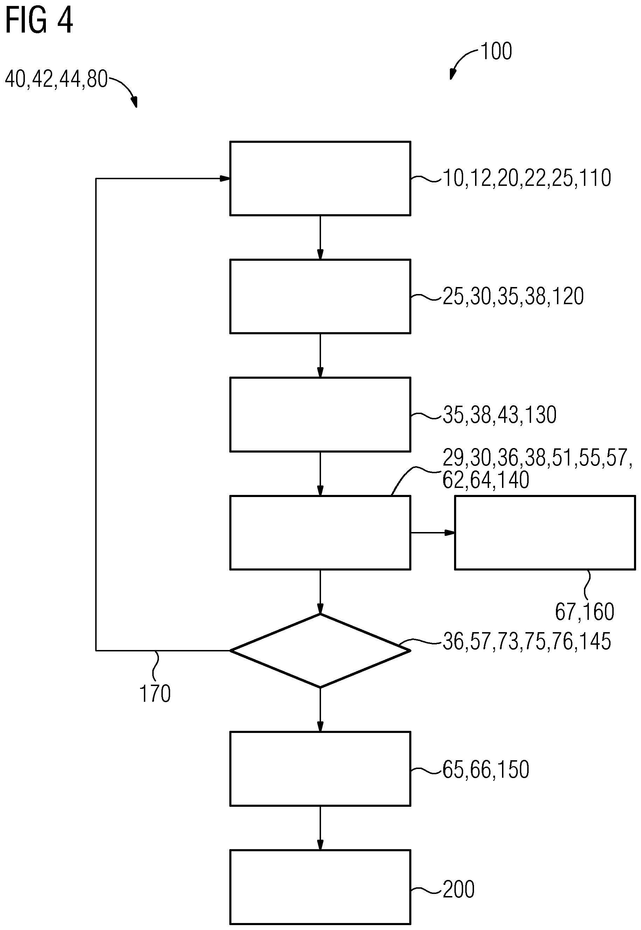

FIG 3 zeigt schematisch einen weiteren Aspekt des fünften Verfahrensschritts 150 des beanspruchten Verfahrens 100. Insbesondere wird mit dem in FIG 3 gezeigten Auswertediagramms 70 ein Warn- oder Reaktionsverhalten des Verfahrens 100 dargestellt. Das Auswertediagramm 70 umfasst eine horizontale Zeitachse 71 und eine vertikale Größenachse 72, an der eine Modell-Restlebensdauer 36 und eine Eintrittswahrscheinlichkeit 57 dazu angetragen sind. Beide Größen sind in FIG 4 für den ersten Schädigungsmechanismus 38 dargestellt und beziehen sich auf eine Getriebekomponente 12, die als Zahnrad 14, als Welle 16 oder als Lager 18 ausgebildet sein kann. Die Getriebekomponente 12 ist entlang der Zeitachse 71 ferner einem vorgebbaren Lastniveau 29 unterworfen. Die Modell-Restlebensdauer 36 und die Eintrittswahrscheinlichkeit 57 nehmen entlang der Zeitachse 71 ab. Sowohl für die Modell-Restlebensdauer 36 ist ein einstellbarer erster Schwellenwert 75 definiert. Bei einem Unterschreiten des ersten Schwellenwerts 75 durch die Modell-Restlebensdauer 36 wird eine Warnung 65 und/oder eine Bevorratungsanweisung 66 ausgelöst. Damit wird ein Benutzer vor einem bevorstehenden Versagen der Getriebekomponente 12 gewarnt bzw. das Bereitstellen eines Ersatzteils veranlasst. In analoger Weise ist für die Eintrittswahrscheinlichkeit 57 ein einstellbarer zweiter Schwellenwert 76 vorgegeben. Bei einem Unterschreiten des zweiten Schwellenwerts 76 durch die Eintrittswahrscheinlichkeit 57 wird auch eine Warnung 65 und/oder eine Bevorratungsanweisung 66 für die Getriebekomponente 12 ausgegeben. Der erste und zweite Schwellenwert 75, 76 gehören zu den Parametern 73, die wie in FIG 1 dargestellt, den Ablauf des Verfahrens 100 beeinflussen und sind durch eine Benutzereingabe 78 oder einen Algorithmus 79 vorgebbar.

In FIG 4 ist schematisch der Ablauf einer zweiten Ausführungsform des beanspruchten Verfahrens 100 dargestellt. Das Verfahren 100 geht von einem ersten Verfahrensschritt 110 aus, in dem das Getriebe 10 mit der Mehrzahl an Getriebekomponenten 12 bereitgestellt wird, wobei zumindest eine erste Getriebekomponente 12 zu überwachen ist. Das Getriebe 10 befindet sich dabei in einem Betriebszustand 20, in dem eine mechanische Beanspruchung 25 der ersten Getriebekomponente 12 unter Einsatz eines Sensors 22 ermittelt wird. Daran schließt sich ein zweiter Verfahrensschritt 120 an, in dem basierend auf der mechanischen Beanspruchung 25 korrespondierender ein Schädigungsbeitrag 35 im Rahmen eines einstellbaren Schadensakkumulationsmodells 30 und eines einstellbaren ersten Schädigungsmechanismus 38 ermittelt wird. In einem darauffolgenden dritten Verfahrensschritt 130 wird der Schädigungsbeitrag 35 zu einer Schadenssumme 43 im Schadensakkumulationsmodell 30 für den ersten Schädigungsmechanismus 38 hinzugefügt. In einem anschließenden vierten Verfahrensschritt 140 erfolgt ein Ermitteln einer Modell-Restlebensdauer 36 für den ersten Schädigungsmechanismus 38 im Rahmen des Schadensakkumulationsmodells 30. Ebenso wird im vierten Verfahrensschritt 140 eine Eintrittswahrscheinlichkeit 57 für die entsprechende Modell-Restlebensdauer 36. Dabei stützt sich die Ermittlung der Modell-Restlebensdauer 36 und deren Eintrittswahrscheinlichkeit 57 auf ein einstellbares Lastniveau 29, das einem erwarteten oder angestrebtem künftigen Betrieb der Getriebekomponente 12, und damit des Getriebes 10, entspricht. Die Eintrittswahrscheinlichkeit 57 wird dabei anhand von Datensätzen 64 von Vergleichskomponenten 62 ermittelt, durch die eine Verteilungsfunktion 51 von Lebensdauern gegeben wird. Parallel zum vierten Verfahrensschritt 140 erfolgt ein sechster Verfahrensschritt 160, in dem ausgehend von der Modell-Rest-lebensdauer 36 und der Eintrittswahrscheinlichkeit 57 eine Aufwandsprogose 67 für einen Wartungsvorgang für die erste Getriebekomponente 12 durchgeführt wird. Ein Resultat der Aufwandsprognose 67 ist einem Benutzer anzeigbar. Auf den vierten Verfahrensschritt 140 folgt eine erste Verzweigung 145, an der die Modell-Restlebensdauer 36 und/oder die Eintrittswahrscheinlichkeit 57 aus dem vierten Verfahrensschritt 140 mit einstellbaren Parametern 73 verglichen werden. Die einstellbaren Parameter 73 umfassen auch einen ersten und einen zweiten Schwellenwert 75, 76 für die Modell-Restlebensdauer 36 bzw. die Eintrittswahrscheinlichkeit 57. Wenn die Schwellenwerte 75, 76 überschritten werden, wird erkannt, dass kein Betriebszustand vorliegt, der eine Reaktion gebietet und das Verfahren 100 kehrt über eine Rückführungsschleife 170 zum ersten Verfahrensschritt 110 zurück. Bei einem Unterschreiten des ersten und/oder zweiten Schwellenwerts 75, 76 durch die Modell-Restlebensdauer 36 bzw. die Eintrittswahrscheinlichkeit 57 erfolgt ein fünfter Verfahrensschritt 150. Darin wird eine Warnung 65 ausgegeben und/oder eine Bevorratungsanweisung 66 für die erste Getriebekomponente 12 ausgegeben. Anschließend erreicht das Verfahren 100 einen Endzustand 200. Das Verfahren 100 nach FIG 4 läuft vollständig oder funktional geteilt in einem oder mehreren Computerprogrammprodukten 80 ab, die auf einer Steuereinheit 40 nicht-flüchtig und ausführbar gespeichert sind. Die Steuereinheit 40 umfasst dabei eine interne Steuereinheit 42 und/oder eine übergeordnete Steuereinheit 44.

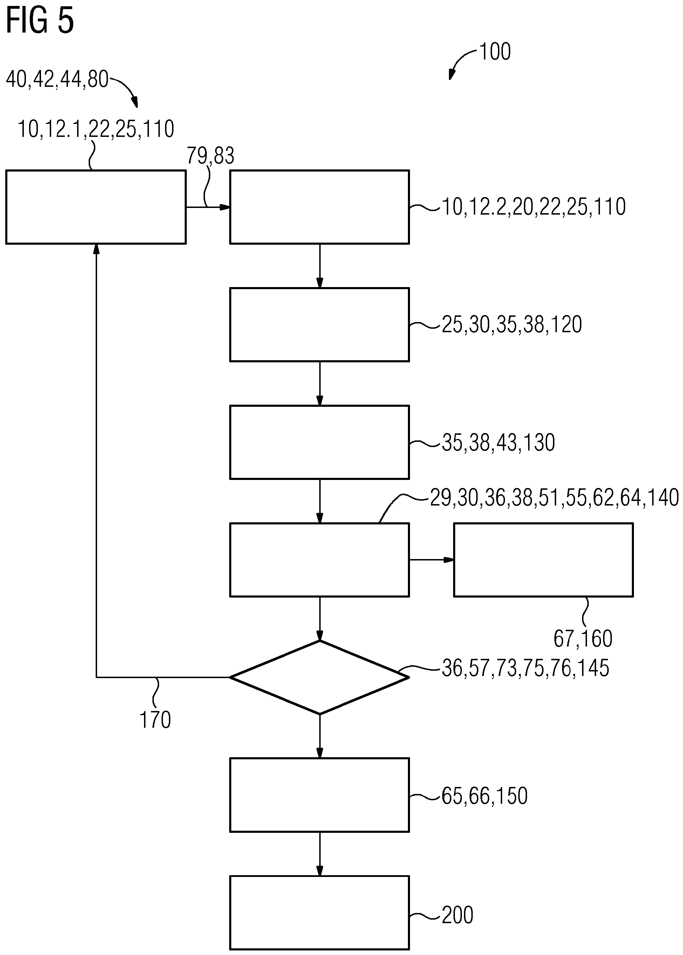

FIG 5 zeigt einen schematischen Ablauf einer dritten Ausführungsform des beanspruchten Verfahrens 100. Das Verfahren 100 geht von einem ersten Verfahrensschritt 110 aus, in dem mittels eines Sensors 22 eine mechanische Beanspruchung 25 einer ersten Getriebekomponente 12.1 in einem Betriebszustand 20 ermittelt wird. Anhand einer Übertragungsfunktion 83 wird hieraus eine mechanische Beanspruchung 25 einer zweiten Getriebekomponente 12.2 im gleichen Betriebszustand 20 ermittelt. Die erste und zweite Getriebekomponente 12.1 und 12.2 gehören zum gleichen Getriebe 10. Unter einer Übertragungsfunktion 83 ist ein physikalischer Zusammenhang zwischen der ersten und zweiten Getriebekomponente 12.1, 12.2 zu verstehen, der eine mechanische Beanspruchung 25 der ersten Getriebekomponente 12.1 im Wesentlichen in Abhängigkeit von der mechanischen Beanspruchung 25 der zweiten Getriebekomponente 12.2 beschreibt. Eine solche Übertragungsfunktion 83 kann als Wertetabelle, als Algorithmus 79, oder als Simulation ausgebildet sein. Ausgehend von der mechanischen Beanspruchung 25 der zweiten Getriebekomponente 12.2 erfolgen der zweite, dritte, vierte, fünfte und sechste Verfahrensschritt 120, 130, 140, 150, 160 analog zu FIG 4.

Dem ersten Verfahrensschritt 110 schließt sich ein zweiter Verfahrensschritt 120 an, in dem basierend auf der mechanischen Beanspruchung 25 korrespondierender ein Schädigungsbeitrag 35 im Rahmen eines einstellbaren Schadensakkumulationsmodells 30 und eines einstellbaren ersten Schädigungsmechanismus 38 ermittelt wird. In einem darauffolgenden dritten Verfahrensschritt 130 wird der Schädigungsbeitrag 35 zu einer Schadenssumme 43 im Schadensakkumulationsmodell 30 für den ersten Schädigungsmechanismus 38 hinzugefügt. In einem anschließenden vierten Verfahrensschritt 140 erfolgt ein Ermitteln einer Modell-Restlebensdauer 36 für den ersten Schädigungsmechanismus 38 im Rahmen des Schadensakkumulationsmodells 30. Ebenso wird im vierten Verfahrensschritt 140 eine Eintrittswahrscheinlichkeit 57 für die entsprechende Modell-Restlebensdauer 36. Dabei stützt sich die Ermittlung der Modell-Restlebensdauer 36 und deren Eintrittswahrscheinlichkeit 57 auf ein einstellbares Lastniveau 29, das einem erwarteten oder angestrebtem künftigen Betrieb der zweiten Getriebekomponente 12.2, und damit des Getriebes 10, entspricht. Die Eintrittswahrscheinlichkeit 57 wird dabei anhand von Datensätzen 64 von Vergleichskomponenten 62 ermittelt, durch die eine Verteilungsfunktion 51 von Lebensdauern gegeben wird. Parallel zum vierten Verfahrensschritt 140 erfolgt ein sechster Verfahrensschritt 160, in dem ausgehend von der Modell-Restlebensdauer 36 und der Eintrittswahrscheinlichkeit 57 eine Aufwandsprogose 67 für einen Wartungsvorgang für die zweiten Getriebekomponente 12.2 durchgeführt wird. Ein Resultat der Aufwandsprognose 67 ist einem Benutzer anzeigbar. Auf den vierten Verfahrensschritt 140 folgt eine erste Verzweigung 145, an der die Modell-Restlebensdauer 36 und/oder die Eintrittswahrscheinlichkeit 57 aus dem vierten Verfahrensschritt 140 mit einstellbaren Parametern 73 verglichen werden. Die einstellbaren Parameter 73 umfassen auch einen ersten und einen zweiten Schwellenwert 75, 76 für die Modell-Restlebensdauer 36 bzw. die Eintrittswahrscheinlichkeit 57. Wenn die Schwellenwerte 75, 76 überschritten werden, wird erkannt, dass kein Betriebszustand vorliegt, der eine Reaktion gebietet und das Verfahren 100 kehrt über eine Rückführungsschleife 170 zum ersten Verfahrensschritt 110 zurück. Bei einem Unterschreiten des ersten und/oder zweiten Schwellenwerts 75, 76 durch die Modell-Restlebensdauer 36 bzw. die Eintrittswahrscheinlichkeit 57 erfolgt ein fünfter Verfahrensschritt 150. Darin wird eine Warnung 65 ausgegeben und/oder eine Bevorratungsanweisung 66 für die zweite Getriebekomponente 12.2 ausgegeben. Anschließend erreicht das Verfahren 100 einen Endzustand 200. Das Verfahren 100 nach FIG 5 läuft vollständig oder funktional geteilt in einem oder mehreren Computerprogrammprodukten 80 ab, die auf einer Steuereinheit 40 nicht-flüchtig und ausführbar gespeichert sind. Die Steuereinheit 40 umfasst dabei eine interne Steuereinheit 42 und/oder eine übergeordnete Steuereinheit 44.

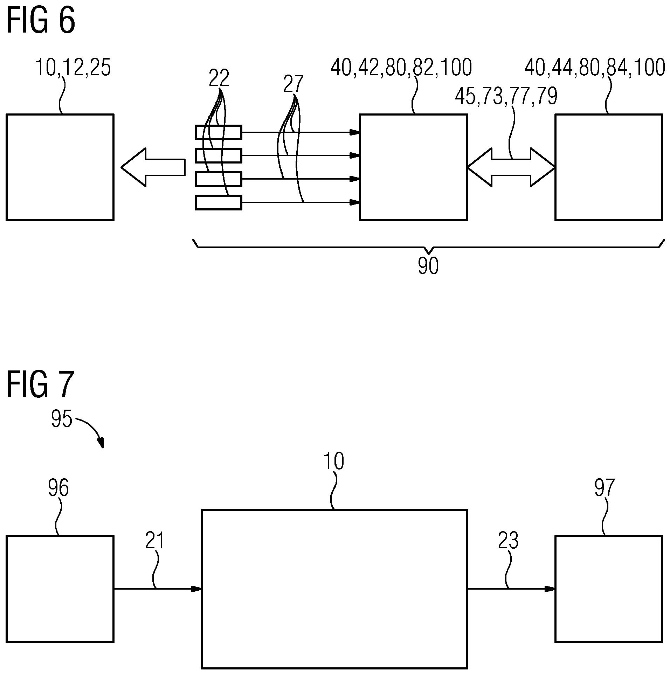

Der Aufbau einer ersten Ausführungsform des beanspruchten Überwachungssystems 90 ist in FIG 6 abgebildet. Das Überwachungssystem 90 umfasst eine Mehrzahl an Sensoren 22, die dazu ausgebildet sind, mittelbar oder unmittelbar eine mechanische Beanspruchung 25 einer Getriebekomponente 12 eines Getriebes 10 zu erfassen. Dazu werden von den Sensoren 22 Messdaten 27 an eine Steuereinheit 40 übertragen, die eine interne Steuereinheit 42 umfasst. In einem Speicher der internen Steuereinheit 42 ist in nicht-flüchtiger Form ein Computerprogrammprodukt 80 in ausführbarer Weise gespeichert. Die interne Steuereinheit 42 ist dazu ausgebildet, die Messdaten 27 von den Sensoren 22 zu empfangen und mit dem Computerprogrammprodukt 80 zu verarbeiten. Das Computerprogrammprodukt 80 weist ein erstes Teilprogramm 82 auf, das auf der ersten Steuereinheit 42 nicht-flüchtig ausführbar gespeichert ist.

Durch das erste Teilprogramm 82 wird das beanspruchte Verfahren 100 in zumindest einer Ausführungsform teilweise umgesetzt. Das erste Teilprogramm 82 ist über eine Datenverbindung 45 kommunikativ mit einer übergeordneten Steuereinheit 44 gekoppelt. Ferner ist auf der übergeordneten Steuereinheit 44 ein zweites Teilprogramm 84 nicht-flüchtig und ausführbar gespeichert, das zum gleichen Computerprogrammprodukt 80 gehört wie das erste Teilprogramm 82. Durch die kommunikative Datenverbindung 45 zwischen der internen und übergeordnet Steuereinheit 42, 44 erfolgt eine Kommunikation zwischen dem ersten und zweiten Teilprogramm 82, 84. Das zweite Teilprogramm 84 setzt das beanspruchte Verfahren 100 teilweise um. Durch die kommunikative Datenverbindung 45 verwirklichen das erste und zweite Teilprogramm 82, 84 im Zusammenspiel das beanspruchte Verfahren 100 komplett. Dazu tauschen das erste und zweite Teilprogramm 82, 84 Parameter 73, Werte aus Vorgaben 77 und/oder Werte von Algorithmen 79 aus.

FIG 7 zeigt schematisch den Aufbau einer beanspruchten Getriebeapplikation 95, die eine Antriebseinheit 96, eine Abtriebseinheit 97 und ein Getriebe 10 umfasst. Das Getriebe 10 ist zwischen der Antriebseinheit 96 und der Abtriebseinheit 97 angebracht. Durch das Getriebe 10 wird eine Antriebsleistung 21 von der Antriebseinheit 96 in puncto Drehzahl und Drehmoment verändert als Abtriebsleistung 23 an die Abtriebseinheit 97 weitergeleitet. Die Getriebeapplikation 95 kann dabei als Industrie-Anwendung, als Windenergieanlage, als Landfahrzeug, als Wasserfahrzeug oder als Luftfahrzeug ausgebildet sein.

## Patentansprüche

1. Betriebsverfahren (100) für ein Getriebe (10) für eine als Windkraftanlage oder Industrieanwendung ausgestaltete Getriebeapplikation mit einer Mehrzahl an Getriebekomponenten (12, 12.1, 12.2), umfassend die Schritte:
a) Herstellen eines Betriebszustands (20) des Getriebes (10) und Erfassen einer korrespondierenden mechanischen Beanspruchung (25) einer ersten Getriebekomponente (12, 12.1);
b) Ermitteln eines Schädigungsbeitrags (35) an der ersten Getriebekomponente (12, 12.1) anhand der ermittelten mechanischen Beanspruchung (25) für einen ersten Schädigungsmechanismus (38);
c) Hinzufügen des Schädigungsbeitrags (35) zu einer Schadenssumme (43) in einem ersten Schadensakkumulationsmodell (30) des ersten Schädigungsmechanismus (38);
d) Ermitteln einer Modell-Restlebensdauer (36) der ersten Getriebekomponente (12, 12.1) anhand des ersten Schadensakkumulationsmodells (30) und Ermitteln einer Eintrittswahrscheinlichkeit (57) für die Modell-Restlebensdauer (36);
wobei die Eintrittswahrscheinlichkeit (57) für die Modell-Restlebensdauer (36) anhand von Datensätzen (64) von Vergleichskomponenten (62) ermittelt wird, die baugleich zur ersten Getriebekomponente (12, 12.1) ausgebildet sind, wobei im Schritt b) auch für einen zweiten Schädigungsmechanismus (39) ein Schädigungsbeitrag (35) ermittelt wird und die Schritte c) und d) anhand dessen auch für einen zweiten Schädigungsmechanismus (39) durchgeführt werden, was ein Ermitteln einer Schadenssumme (43) für den zweiten Schädigungsmechanismus (39) umfasst, **dadurch gekennzeichnet, dass**
zumindest eine Modell-Lebensdauer (36) und deren Eintrittswahrscheinlichkeit (57) in einem Datensatz (64) gespeichert werden, der eine Information über den Typ des entsprechenden Schädigungsmechanismus aufweist,
wobei der Datensatz (64) für baugleiche weitere Getriebekomponenten (62) als Vergleichsdatensatz (64) dient und die Vergleichskomponenten (62) in Fremdgetrieben eingesetzt werden, wobei das Fremdgetriebe ein von dem Getriebe (10) verschiedenes Getriebe in einer anderen Getriebeapplikation ist.

2. Betriebsverfahren (100) nach Anspruch 1, **dadurch gekennzeichnet, dass** zumindest eine erfasste mechanische Beanspruchung (25) in dem Datensatz (64) gespeichert wird.

3. Betriebsverfahren (100) nach Anspruch 1 oder 2, **dadurch gekennzeichnet, dass** zumindest ein Schädigungsbeitrag (25) und/oder zumindest eine Schadenssumme (43) in dem Datensatz (64) gespeichert werden.

4. Betriebsverfahren (100) nach Anspruch 1 bis 3, **dadurch gekennzeichnet, dass** in einem weiteren Schritt e) ein Ausgeben einer Warnung (65) erfolgt, wenn die Modell-Restlebensdauer (36) einen einstellbaren ersten Schwellenwert (75) und/oder die Eintrittswahrscheinlichkeit (57) einen einstellbaren zweiten Schwellenwert (76) unterschreitet.

5. Betriebsverfahren (100) nach einem der Ansprüche 1 bis 4, **dadurch gekennzeichnet, dass** im Schritt b) anhand der mechanischen Beanspruchung (25) der ersten Getriebekomponente (12, 12.1) anhand einer Übertragungsfunktion (83) eine mechanische Beanspruchung (25) einer zweiten Getriebekomponente (12.2) ermittelt wird und zumindest die Schritte c) und d) auch für die zweite Getriebekomponente (12.2) durchgeführt werden.

6. Betriebsverfahren (100) nach einem der Ansprüche 1 bis 5, **dadurch gekennzeichnet, dass** der erste oder zweite Schädigungsmechanismus (38, 39) als High-Cycle-Fatigue, Low-Cycle-Fatigue, Verschleiß, Zahnfußbruch oder Pitting an einer Verzahnung ausgebildet ist.

7. Betriebsverfahren (100) nach einem der Ansprüche 1 bis 6, **dadurch gekennzeichnet, dass** die Eintrittswahrscheinlichkeit (57) für die Modell-Restlebensdauer (36) anhand einer Verteilungsfunktion (51) von zulässigen Schadenssummen (43) der Vergleichskomponenten (62) ermittelt wird.

8. Betriebsverfahren (100) nach einem der Ansprüche 1 bis 7, **dadurch gekennzeichnet, dass** die Schadenssumme (43) mittels eines Algorithmus (79) und/oder einer Benutzereingabe (78) einstellbar ist.

9. Betriebsverfahren (100) nach einem der Ansprüche 1 bis 8, **dadurch gekennzeichnet, dass** mittels der Modell-Restlebensdauer (36) und/oder deren Eintrittswahrscheinlichkeit (57) ein zu erwartender Reparaturaufwand (67) für die erste Getriebekomponente (12, 121) und/oder das Getriebe (10) ermittelt wird.

10. Betriebsverfahren (100) nach Anspruch 9, **dadurch gekennzeichnet, dass** zumindest für die erste Getriebekomponente (12, 12.1) eine Bevorratungsanweisung (66) an ein Materialwirtschaftssystem (68) ausgegeben wird.

11. Betriebsverfahren (100) nach einem der Ansprüche 1 bis 10, **dadurch gekennzeichnet, dass** die Modell-Restlebensdauer (36) und/oder deren Eintrittswahrscheinlichkeit (57) anhand eines einstellbaren Lastniveaus (29) für einen Weiterbetrieb der ersten Getriebekomponente (12, 12.1) ermittelt wird.

12. Computerprogrammprodukt (80), umfassend zumindest ein Teilprogramm (82), das dazu ausgebildet ist, ein Betriebsverfahren (100) für ein Getriebe (10) vollständig oder zumindest teilweise in Datenverbindung (45) mit einem zweiten Teilprogramm (84) durchzuführen, **dadurch gekennzeichnet, dass** das Betriebsverfahren (100) nach einem der Ansprüche 1 bis 11 ausgebildet ist.

13. Steuereinheit (40) für ein Getriebe (10), die einen Speicher und eine Recheneinheit zur Ausführung eines Computerprogrammprodukts (80) aufweist, **dadurch gekennzeichnet, dass** das Computerprogrammprodukt (90) nach Anspruch 12 ausgebildet ist, und dass die Steuereinheit (40) als interne Steuereinheit (42) am Getriebe (10) angeordnet ist, oder als übergeordnete Steuereinheit (44) getrennt vom Getriebe (10) installiert ist.

14. Überwachungssystem (90) für ein Getriebe (10), das mit zumindest einer ersten zu überwachenden Getriebekomponente (12, 12.1) koppelbar ist, umfassend eine Mehrzahl an Sensoren (22) zu einem Erfassen von Messdaten (27), die mit einer mechanischen Beanspruchung (25) der ersten Getriebekomponente (12, 12.1) korrespondieren, und zumindest eine Steuereinheit (40), die mit der Mehrzahl an Sensoren (22) verbunden ist und als interne Steuereinheit (42) und/oder übergeordnete Steuereinheit (44) ausgebildet ist, **dadurch gekennzeichnet, dass** die Steuereinheit (44) nach Anspruch 13 ausgebildet ist.

15. Getriebe (10), umfassend eine Mehrzahl an Getriebekomponenten (12, 12.1, 12.2), wobei zumindest eine erste Getriebekomponente (12, 12.1) mit zumindest einem Sensor (22) gekoppelt ist, wobei der Sensor (22) einem Überwachungssystem (90) zugeordnet ist, **dadurch gekennzeichnet, dass** das Überwachungssystem (90) nach Anspruch 14 ausgebildet ist.

16. Getriebeapplikation (95), umfassend ein Getriebe (10), das zwischen einer Antriebseinheit (96) und einer Abtriebseinheit (97) zu einer Drehzahländerung angeordnet ist, wobei die Getriebeapplikation (95) als Windkraftanlage oder Industrieanwendung ausgestaltet ist, **dadurch gekennzeichnet, dass** das Getriebe (10) nach Anspruch 15 ausgebildet ist.

## Claims

1. Operating method (100) for a transmission (10) for a transmission application which is configured as a wind power plant or an industrial application and has a plurality of transmission components (12, 12.1, 12.2) comprising the steps:
a) establishing an operating state (20) of the transmission (10) and detecting a corresponding mechanical load (25) of a first transmission component (12, 12.1);
b) determining a degradation contribution (35) at the first transmission component (12, 12.1) on the basis of the determined mechanical load (25) for a first degradation mechanism (38);
c) adding the degradation contribution (35) to a damage sum (43) in a first damage accumulation model (30) of the first degradation mechanism (38);
d) determining a model remaining service life (36) of the first transmission component (12, 12.1) on the basis of the first damage accumulation model (30), and determining an occurrence probability (57) for the model remaining service life (36);
wherein the occurrence probability (57) is determined for the model remaining service life (36) on the basis of data sets (64) of comparison components (62) which are of structurally identical configuration with respect to the first transmission component (12, 12.1), wherein, in step b), a degradation contribution (35) is also determined for a second degradation mechanism (39), and steps c) and d) are also carried out on the basis of this degradation contribution for a second degradation mechanism (39), which comprises determining a damage sum (43) for the second degradation mechanism (39), **characterized in that**
at least one model service life (36) and its occurrence probability (57) are stored in a data set (64) which has an information item about the type of the corresponding degradation mechanism,
wherein the data set (64) for structurally identical further transmission components (62) serves as a comparative data set (64) and the comparative components (62) are used in different transmissions, wherein the different transmission is a transmission which is different from the transmission (10) in a different transmission application.

2. Operating method (100) according to Claim 1, **characterized in that** at least one detected mechanical load (25) is stored in the data set (64).

3. Operating method (100) according to Claim 1 or 2, **characterized in that** at least one degradation contribution (25) and/or at least one damage sum (43) are/is stored in the data set (64).

4. Operating method (100) according to Claims 1 to 3, **characterized in that**, in a further step e), a warning (65) is output if the model remaining service life (36) undershoots an adjustable first threshold value (75) and/or the occurrence probability (57) undershoots an adjustable second threshold value (76).

5. Operating method (100) according to one of Claims 1 to 4, **characterized in that**, in step b), a mechanical load (25) of the second transmission component (12.2) is determined on the basis of the mechanical load (25) of the first transmission component (12, 12.1) using a transfer function (83), and at least steps c) and d) are also carried out for the second transmission component (12.2).

6. Operating method (100) according to one of Claims 1 to 5, **characterized in that** the first or second degradation mechanism (38, 39) is configured as high-cycle fatigue, low-cycle fatigue, wear, tooth root fracture or pitting on a toothing system.

7. Operating method (100) according to one of Claims 1 to 6, **characterized in that** the occurrence probability (57) for the model remaining service life (36) is determined on the basis of a distribution function (51) of permissible damage sums (43) of the comparative components (62).

8. Operating method (100) according to one of Claims 1 to 7, **characterized in that** the damage sum (43) is adjustable by means of an algorithm (79) and/or a user input (78).

9. Operating method (100) according to one of Claims 1 to 8, **characterized in that** a scope of repair (67) to be expected is determined for the first transmission component (12, 121) and/or the transmission (10) by means of the model remaining service life (36) and/or its occurrence probability (57).

10. Operating method (100) according to Claim 9, **characterized in that** a stocking order (66) is output to a material management system (68) at least for the first transmission component (12, 12.1).

11. Operating method (100) according to one of Claims 1 to 10, **characterized in that** the model remaining service life (36) and/or its occurrence probability (57) are/is determined on the basis of an adjustable load level (29) for further operation of the first transmission component (12, 12.1).

12. Computer program product (80), comprising at least one subprogram (82) which is configured to carry out an operating method (100) for a transmission (10) completely or at least partially with a data link (45) to a second subprogram (84), **characterized in that** the operating method (100) is configured according to one of Claims 1 to 11.

13. Control unit (40) for a transmission (10), which control unit has a memory and a computing unit for running a computer program product (80), **characterized in that** the computer program product (90) is configured according to Claim 12, and **in that** the control unit (40) is arranged as an internal control unit (42) in the transmission (10), or is installed separately from the transmission (10) as a higher-level control unit (44).

14. Monitoring system (90) for a transmission (10), which monitoring system can be coupled to at least a first transmission component (12, 12.1) to be monitored, comprising: a plurality of sensors (22) for detecting measurement data (27) which correspond to a mechanical load (25) of the first transmission component (12, 12.1); and at least one control unit (40) which is connected to the plurality of sensors (22) and is configured as an internal control unit (42) and/or a higher-level control unit (44), **characterized in that** the control unit (44) is configured according to Claim 13.

15. Transmission (10), comprising a plurality of transmission components (12, 12.1, 12.2), wherein at least one first transmission component (12, 12.1) is coupled to at least one sensor (22), wherein the sensor (22) is assigned to a monitoring system (90), **characterized in that** the monitoring system (90) is configured according to Claim 14.

16. Transmission application (95), comprising a transmission (10) which is arranged between a drive unit (96) and an output unit (97) in order to change the rotational speed, wherein the transmission application (95) is configured as a wind power plant or an industrial application, **characterized in that** the transmission (10) is configured according to Claim 15.

## Revendications

1. Procédé de fonctionnement (100) pour un engrenage (10) pour une application d'engrenage conçu sous la forme d'une éolienne ou d'une application industrielle, ayant une pluralité de composants d'engrenage (12, 12.1, 12.2), comprenant les étapes suivantes :
a) établissement d'un état de fonctionnement (20) de l'engrenage (10) et détection d'une sollicitation mécanique (25) correspondante d'un premier composant d'engrenage (12, 12.1) ;
b) détermination d'une contribution à l'endommagement (35) sur le premier composant d'engrenage (12, 12.1) en utilisant la sollicitation mécanique (25) déterminée pour un premier mécanisme d'endommagement (38) ;
c) ajout de la contribution à l'endommagement (35) à une somme de dommages (43) dans un premier modèle d'accumulation de dommages (30) du premier mécanisme de dommages (38) ;
d) détermination d'une durée de vie résiduelle de modèle (36) du premier composant d'engrenage (12, 12.1) en utilisant le premier modèle d'accumulation de dommages (30) et détermination d'une probabilité d'occurrence (57) pour la durée de vie résiduelle de modèle (36) ;
la probabilité d'occurrence (57) pour la durée de vie résiduelle (36) du modèle étant déterminée en utilisant des ensembles de données (64) de composants de comparaison (62) qui sont de construction identique au premier composant d'engrenage (12, 12.1), une contribution à l'endommagement (35) étant déterminée à l'étape b) également pour un deuxième mécanisme d'endommagement (39) et les étapes c) et d) étant exécutées en utilisant celui-ci également pour un deuxième mécanisme d'endommagement (39), ce qui comprend une détermination d'une somme de dommages (43) pour le deuxième mécanisme d'endommagement (39), **caractérisé en ce que**
au moins une durée de vie de modèle (36) et sa probabilité d'occurrence (57) sont enregistrées dans un ensemble de données (64), qui présente une information sur le type du mécanisme d'endommagement correspondant,
l'ensemble de données (64) servant d'ensemble de données de comparaison (64) pour d'autres composants d'engrenage (62) de construction identique et les composants de comparaison (62) étant utilisés dans des engrenages tiers, l'engrenage tiers étant un engrenage différent de l'engrenage (10) dans une autre application d'engrenage.

2. Procédé de fonctionnement (100) selon la revendication 1, **caractérisé en ce qu'**au moins une sollicitation mécanique (25) détectée est mémorisée dans l'ensemble de données (64).

3. Procédé de fonctionnement (100) selon la revendication 1 ou la revendication 2, **caractérisé en ce qu'**au moins une contribution à l'endommagement (25) et/ou au moins une somme d'endommagement (43) sont enregistrées dans l'enregistrement de données (64).

4. Procédé de fonctionnement (100) selon les revendications 1 à 3, **caractérisé en ce que** dans une autre étape e), un avertissement (65) est émis si la durée de vie résiduelle (36) du modèle est inférieure à une première valeur seuil (75) réglable et/ou la probabilité d'occurrence (57) tombe en dessous d'une deuxième valeur seuil (76) réglable.

5. Procédé de fonctionnement (100) selon l'une des revendications 1 à 4, **caractérisé en ce qu'**à l'étape b), une sollicitation mécanique (25) d'un deuxième composant d'engrenage (12.2) est déterminée en utilisant la sollicitation mécanique (25) du premier composant d'engrenage (12, 12.1) au moyen d'une fonction de transfert (83), et au moins les étapes c) et d) sont également exécutées pour le deuxième composant d'engrenage (12.2).

6. Procédé de fonctionnement (100) selon l'une des revendications 1 à 5, **caractérisé en ce que** le premier ou le deuxième mécanisme d'endommagement (38, 39) est réalisé sous forme de fatigue cyclique élevée (« High-Cycle-Fatigue »), une fatigue cyclique faible (« Low-Cycle-Fatigue »), une usure, une rupture de racine de dent ou de d'endommagement (« pitting ») sur une denture.

7. Procédé de fonctionnement (100) selon l'une des revendications 1 à 6, **caractérisé en ce que** la probabilité d'occurrence (57) pour la durée de vie résiduelle du modèle (36) est déterminée en utilisant une fonction de distribution (51) de sommes de dommages admissibles (43) des composants de comparaison (62).

8. Procédé de fonctionnement (100) selon l'une des revendications 1 à 7, **caractérisé en ce que** la somme de dommages (43) est apte à être réglée au moyen d'un algorithme (79) et/ou d'une entrée utilisateur (78).

9. Procédé de fonctionnement (100) selon l'une des revendications 1 à 8, **caractérisé en ce qu'**un coût de réparation (67) à prévoir pour le premier composant de l'engrenage (12, 121) et/ou l'engrenage (10) est déterminé au moyen de la durée de vie résiduelle du modèle (36) et/ou de sa probabilité d'occurrence (57).

10. Procédé de fonctionnement (100) selon la revendication 9, **caractérisé en ce qu'**au moins pour le premier composant d'engrenage (12, 12.1), une instruction d'approvisionnement (66) est émise à un système de gestion de matériel (68).

11. Procédé de fonctionnement (100) selon l'une des revendications 1 à 10, **caractérisé en ce que** la durée de vie résiduelle du modèle (36) et/ou sa probabilité d'occurrence (57) est déterminée en utilisant un niveau de charge réglable (29) pour une poursuite de l'exploitation du premier composant de l'engrenage (12, 12.1).

12. Produit de programme informatique (80), comprenant au moins un sous-programme (82), qui est conçu pour mettre en œuvre un procédé de fonctionnement (100) pour un engrenage (10) entièrement ou au moins partiellement en liaison de données (45) avec un deuxième sous-programme (84), **caractérisé en ce que** le procédé de fonctionnement (100) est conçu selon l'une des revendications 1 à 11.

13. Unité de commande (40) pour un engrenage (10), qui présente une mémoire et une unité de calcul pour l'exécution d'un produit de programme informatique (80), **caractérisée en ce que** le produit de programme informatique (80) est conçu selon la revendication 12, et **en ce que** l'unité de commande (40) est agencée en tant qu'unité de commande interne (42) sur l'engrenage (10), ou est installée comme unité de commande supérieure (44) séparément de l'engrenage (10).

14. Système de surveillance (90) pour un engrenage (10), qui est apte à être relié à au moins un premier composant d'engrenage (12, 12.1) à surveiller, comprenant une pluralité de capteurs (22) pour une saisie de données de mesure (27) qui correspondent à une sollicitation mécanique (25) du premier composant d'engrenage (12, 12.1), et au moins une unité de commande (40) qui est reliée à la pluralité de capteurs (22) et qui est conçue sous la forme d'une unité de commande interne (42) et/ou d'une unité de commande supérieure (44), **caractérisé en ce que** l'unité de commande (44) est conçue selon la revendication 13.

15. Engrenage (10), comprenant une pluralité de composants d'engrenage (12, 12.1, 12.2), au moins un premier composant d'engrenage (12, 12.1) étant relié à au moins un capteur (22), le capteur (22) étant associé à un système de surveillance (90), **caractérisé en ce que** le système de surveillance (90) est réalisé selon la revendication 14.

16. Application d'engrenage (95), comprenant un engrenage (10) placé entre une unité d'entraînement (96) et une unité de sortie (97) pour modifier la vitesse de rotation, l'application d'engrenage (95) étant conçue sous la forme d'une éolienne ou d'une application industrielle, **caractérisée en ce que** l'engrenage (10) est conçu selon la revendication 15.
